(19) Europäisches Patentamt
European Patent Office
Office européen des brevets

(11) **EP 1 703 650 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
*H04B 10/08* (2006.01)    *G01M 11/00* (2006.01)

(21) Anmeldenummer: **06004456.7**

(22) Anmeldetag: **06.03.2006**

(54) **Diagnoseverfahren und Diagnosechip zur Bandbreitenbestimmung optischer Fasern**

Apparatus and method for bandwidth measurement of optical fibers

Procede et appareil servant a measurer la largeur de bande d'un fibre optique.

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.03.2005 DE 102005011954**
**08.04.2005 DE 102005016522**

(43) Veröffentlichungstag der Anmeldung:
**20.09.2006 Patentblatt 2006/38**

(73) Patentinhaber: **Phoenix Contact GmbH & Co. KG**
**32825 Blomberg (DE)**

(72) Erfinder:
• **Behr, Thorsten**
**32756 Detmold (DE)**
• **Pape, Andreas**
**33034 Brakel (DE)**

(74) Vertreter: **Kampfenkel, Klaus**
**Blumbach - Zinngrebe**
**Patentanwälte**
**Alexandrastrasse 5**
**65187 Wiesbaden (DE)**

(56) Entgegenhaltungen:
**EP-A- 1 018 642**

• **PATENT ABSTRACTS OF JAPAN Bd. 009, Nr. 210 (P-383), 28. August 1985 (1985-08-28) & JP 60 070335 A (NIPPON DENSHIN DENWA KOSHA; others: 01), 22. April 1985 (1985-04-22)**
• **ERNST BONEK OVE: "HOW TO MEASURE TRANSMISSION PROPERTIES OF OPTICAL FIBER SYSTEMS" ELEKTROTECHNIK UND INFORMATIONSTECHNIK, SPRINGER VERLAG, WIEN, AT, Bd. 105, Nr. 10, 1. Oktober 1988 (1988-10-01), Seiten 453-459, XP000026768 ISSN: 0932-383X**

**Beschreibung**

Die Erfindung betrifft allgemein die optische Datenübertragung und insbesondere ein Verfahren und eine Vorrichtung zur Diagnose optischer Fasern.

Für Backbone-Verkabelungen sowie im Zusammenhang mit FastEthernet und Gigabit-Ethernet werden Verkabelungen auf der Basis optischer Kabel immer interessanter. Die Signalübertragung in optischen Fasern, auch als Lichtwellenleiter (LWL) bezeichnet, erfolgt unidirektional über Lichtimpulse, d.h. nur in eine Richtung, weshalb typischerweise mindestens zwei optische Fasern pro Kabel verwendet werden. Die Lichtimpulse werden in der Regel mittels einer Laser-Diode oder einer Lumineszenz-Diode in die Faser eingekoppelt.

Die Vorteile der optischen Datenübertragung bestehen in der hohen erreichbaren Übertragungsrate und der hohen Reichweite, sowie in der Unempfindlichkeit gegenüber elektromagnetischer Strahlung, der Abhörsicherheit und Beständigkeit gegenüber Hitze und Witterungseinflüssen. Durch die dünnen Innenleiter sind optische Kabel außerdem flexibel zu verlegen.

Neben reinen Glasfasern haben aufgrund der geringeren Kosten optische Fasern aus Polymeren eine große Verbreitung gefunden. Optische Fasern aus Polymeren werden als POF-Fasern (Plastic Optical Fiber) bezeichnet und sind reine Plastikfasern, die aus einem transparenten Kern und Mantel besteht, wobei der Mantel einen geringeren Brechungsindex aufweist als das Kernmaterial. Als Kernmaterial werden Polymere wie Polymethylmethacrylat oder Polycarbonat eingesetzt. Zu den polymeren optischen Fasern zählen neben den rein polymeren Fasern auch hybride Fasern, welche eine Kombination aus Glasfaser und Plastikummantelung aufweisen, wie beispielsweise die HCS-Faser (Hard Polymer Cladded Silica).

Die mit Lichtwellenleitern direkt überbrückbare Entfernung ist durch verschiedene Dispersions- und Streuungseffekte begrenzt. Sie ist abhängig von der zu übertragenden Bandbreite und wird daher typischerweise als Bandbreiten-Längen-Produkt angegeben. Gegenüber Glasfasern weisen Polymer-Fasern wie POF oder HCS deutlich höhere Dämpfungswerte auf. POF- bzw. HCS-Fasersysteme werden bei Streckenlängen von 50 bzw. 100 m und Datenraten von 100 Mbit/s bzw. 125 MBd bereits am Rande ihrer technischen Möglichkeiten betrieben. Um eine sichere Datenübertragung zu gewährleisten ist eine Diagnose der optischen Fasern der Übertragungsstrecke heute ein übliches Verfahren.

Ein Verfahren zur Diagnose von optischen Lichtwellenleiterstrecken, insbesondere zur optischen Diagnose beim Interbus, ist beispielsweise aus DE 42 17 899 C2 bekannt. Das dort beschriebene Verfahren dient der Systemoptimierung von LWL-Übertragungsstrecken bei der Inbetriebnahme und sieht ein Verändern der optischen Sendeleistung eines Sendeempfängers vor, bis das auf der Gegenseite empfangene optische Signal den Systemanforderungen entspricht.

Aus EP 1 227 604 A2 ist ein Verfahren bekannt, bei welchem für eine optische Übertragungsstrecke deren aktuelle Pegelreserve zur Empfindlichkeitsgrenze, also zwischen der aktuellen Sendeleistung des Senders und der aktuellen Empfindlichkeitsgrenze des Empfängers, bestimmt wird.

Ein weiteres Verfahren zur Bandbreitebestimmung optischer Fasern ist aus EP-A-1018642 bekannt.

Die optische Diagnose nach dem Stand der Technik zielt darauf ab, die Dämpfung von optischen Verbindungsstrecken zu diagnostizieren, um auf eine sichere Übertragung zu schließen. Dies ist bei niederbitratigen Systemen auch ausreichend. Allerdings ist bei Datenraten ab 100 Mbit/s bei Polymer-(POF) und HCS-Fasern nicht mehr die Kabeldämpfung, sondern die Bandbreite des Kabels der limitierende Faktor für eine fehlerfreie Übertragung. Diese ist aber durch die heute bekannten Verfahren nicht automatisch prüfbar. Ein weiterer Nachteil bekannter Systeme liegt darin, daß der verwendete Fasertyp, wie zum Beispiel POF oder HCS, die an derselben Schnittstelle betreibbar sind, nicht automatisch festgestellt werden kann. Dies wirkt sich auch nachteilig auf die Dämpfungsdiagnose aus, da unterschiedliche Fasertypen auch ein unterschiedliches Dämpfungsverhalten aufweisen und damit die Diagnosedaten unterschiedlich bewertet werden müssen. Typischerweise muß heute der Fasertyp händisch in der Diagnosesoftware angegeben werden.

Der Erfindung liegt daher die Aufgabe zugrunde, einen Weg aufzuzeigen, wie die Diagnose optischer Fasern bzw. Kabel verbessert und/oder vereinfacht werden kann. Insbesondere besteht die Aufgabe der Erfindung darin, ein Verfahren und eine Vorrichtung zur einfachen und kostengünstigen Bandbreitenbestimmung optischer Fasern anzugeben. Eine weitere Aufgabe der Erfindung liegt darin, einen Weg zur Systemoptimierung von optischen Datenübertragungsstrecken aufzuzeigen.

Diese Aufgabe wird in höchst überraschend einfacher Weise durch ein Verfahren gemäß Anspruch 1 und 19, sowie ein elektronisches Bauteil gemäß Anspruch 24 gelöst. Vorteilhafte Ausführungsformen und Weiterbildungen sind Gegenstand der jeweiligen Unteransprüche.

Dementsprechend umfasst ein erfindungsgemäßes Verfahren zur Bestimmung der Bandbreite zumindest einer optischen Faser die Schritte des Einkoppelns von Licht mit einer ersten optischen Leistung und einer ersten Frequenz in die optische Faser, des Messens eines ersten Signalpegels in Abhängigkeit der optischen Leistung des durch die optische Faser hindurchgeleiteten Lichtes der ersten Frequenz, des Einkoppelns von Licht mit einer zweiten optischen Leistung und einer zweiten Frequenz in die optische Faser, des Messens eines zweiten Signalpegels in Abhängigkeit der optischen Leistung des durch die optische Faser hindurchgeleiteten Lichtes der zweiten Frequenz, und des Ermittelns der Bandbreite der optischen Faser in Abhängigkeit der ersten und zweiten eingekoppelten optischen Leistung und/ oder des gemessenen ersten und zweiten Signalpegels unter Verwendung einer vorbestimmten Vorschrift, welche das frequenzabhängige Dämpfungsverhalten der optischen Faser beschreibt.

Vorteilhaft weisen dabei die erste optische Leistung des eingekoppelten Lichtes der ersten Frequenz und die zweite optische Leistung des eingekoppelten Lichtes der zweiten Frequenz vorbestimmte Werte auf, welche insbesondere vorzugsweise im wesentlichen gleich sind.

Bei gleicher Eingangsleistung des eingekoppelten Lichtes der ersten und zweiten Frequenz und bei vorgegebener Vorschrift zur Beschreibung des frequenzabhängigen Dämpfungsverhaltens der Faser kann die Bandbreite aus dem Verhältnis der jeweils für die Ausgangsleistungen gemessenen ersten und zweiten Signalpegel ermittelt werden.

Alternativ wird vorteilhaft die erste optische Leistung des eingekoppelten Lichtes der ersten Frequenz variiert, bis der gemessene erste Signalpegel einen vorbestimmten ersten Schwellwert erreicht, und die zweite optische Leistung des eingekoppelten Lichtes der zweiten Frequenz variiert, bis der gemessene zweite Signalpegel einen vorbestimmten zweiten Schwellwert erreicht. Insbesondere vorteilhaft sind der erste und zweite Schwellwert im wesentlichen gleich.

Vorteilhaft sind der erste Schwellwert bei der ersten Frequenz und der zweite Schwellwert bei der zweiten Frequenz gleich, so dass auf einfache weise die Bandbreite der Faser aus den jeweiligen optischen Eingangsleistungen beziehungsweise dazu proportionalen Größen ermittelt werden kann.

Das Prinzip des erfindungsgemäßen Verfahrens sieht im wesentlichen vor, die Dämpfung zweier optischer Signale unterschiedlicher Frequenz zu bestimmen.und daraus anhand eines vorbekannten charakteristischen Frequenzgangs der Dämpfung der optischen Faser deren Bandbreite zu ermitteln.

Unter Dämpfung sind die Verluste des durch eine optische Faser durchgehenden Lichtes zu verstehen. Ausgedrückt wird die Dämpfung typischerweise als zehnfacher Logarithmus des Verhältnisses der optischen Leistung am Eingang und Ausgang der optischen Faser:

$$(1) \quad A = 10 \cdot \log \frac{P_{Eingang}}{P_{Ausgang}} \, [dB]$$

Die Dämpfung wird hauptsächlich durch die physikalischen Vorgänge Absorption und Streuung sowie durch mechanische Biegung verursacht.

Bei optischen Fasern, welche eine Tiefpaß-Charakteristik aufweisen, entspricht die Bandbreite derjenigen Modulationsfrequenz, bei der die Lichtleistung verglichen zum Wert bei der Frequenz Null um 50 % bzw. 3 dB optisch abgefallen ist.

Um die Genauigkeit des Verfahrens zu erhöhen, weisen die Signale der ersten und zweiten Frequenz vorteilhaft eine stark unterschiedliche frequenzabhängige Dämpfung auf.

Zu diesem Zweck ist es von Vorteil, wenn die erste Frequenz kleiner, insbesondere zumindest um den Faktor 10, insbesondere zumindest um den Faktor 100, kleiner als die Bandbreite der optischen Faser ist. Mit besonderem Vorteil ist die frequenzabhängige Dämpfung der optischen Faser bei der ersten Frequenz im wesentlichen Null, da unter dieser Voraussetzung die Rechenvorschrift zum Ermitteln der Bandbreite deutlich vereinfacht wird.

Die zweite Frequenz liegt vorteilhaft im Bereich der Bandbreite der optischen Faser. Zweckmäßigerweise kann die zweite Frequenz im Bereich der ideal zu erwartenden Bandbreite der optischen Faser und damit typischerweise oberhalb der realen Bandbreite liegen.

Das Signal der zweiten Frequenz erfährt somit eine stärkere Dämpfung als das Signal der ersten Frequenz. Insbesondere weist die optische Faser eine frequenzabhängige Dämpfung für durchgehendes Licht der zweiten Frequenz auf, welche zwischen 1 und 5 dB, insbesondere zwischen 2 und 4 dB, insbesondere etwa 3 dB, oberhalb der frequenzabhängigen Dämpfung für durchgehendes Licht der ersten Frequenz liegt.

Die zumindest eine optische Faser umfasst vorzugsweise ein Polymer und/oder ein Glas und ist insbesondere als POF-oder HCS-Faser ausgebildet. Reine Glasfasern liegen aber ebenso im Rahmen der Erfindung.

Eine vorteilhafte Vorschrift, welche das frequenzabhängige Dämpfungsverhalten einer optischen Faser, insbesondere einer POF- oder HCS-Faser, beschreibt, ist eine Gaußsche Tiefpaß-Funktion, welche durch die Gleichung

$$(2) \quad P(f) = P_0 \cdot \exp\left(-\frac{f^2}{f_0^2}\right)$$

definiert wird.

Mit besonderem Vorteil erfolgt das Messen des ersten und zweiten Signalpegels nach dem OMA-Verfahren (Optical Modulated Amplitude) mittels eines optischen Transceivers, welcher eine DMI-Schnittstelle (Diagnostic Monitoring Interface) gemäß SFF-8472 aufweist.

Die DMI-Schnittstelle (Diagnostic Monitoring Interface) ist eine erweiterte serielle Schnittstelle, welche zu Diagnosezwecken Zugriff auf bestimmte Betriebsparameter eines optischen Transceivers ermöglicht. Zu diesen Betriebsparametern gehören zum Beispiel die Temperatur des Transceivers, die Ausgangsleistung, sowie insbesondere die vom Transceiver empfangene optische Leistung.

Vorteilhaft kann empfängerseitig auch ein optischer Transceiver vorgesehen sein, mit welchem nicht direkt die empfangene optische Leistung ermittelt, sondern nur Schwellwerte für eine bestimmte Lichtleistung detektiert werden können. Ein solcher Transceiver kann einfacher aufgebaut und damit kostengünstiger sein. Die Detektion von Schwellwerten für eine bestimmte Lichtleistung ist beispielsweise bei PSI-MOS-Geräten von PSM umgesetzt.

Die Bestimmung der Bandbreite erfolgt in der auf der Detektion von Schwellwerten basierenden Ausführungsform auf fast dieselbe Art wie in der auf der genauen Messung der empfangenen optischen Lichtleistung basierenden Ausführungsform. Es wird dazu die optische Sendeleistung des Lichtes der ersten und der zweiten Frequenz möglichst genau variiert, während auf der Empfangsseite das Erreichen eines vorgegebenen Schwellwertes der empfangenen optischen Lichtleistung überwacht wird. Dies ist in vielen Fällen technisch einfacher umzusetzen, als eine genaue Lichtleistungsmessung vorzunehmen.

Um die Bandbreite zu bestimmen wird bei der ersten Frequenz die Lichtleistung des Senders angepasst, bis der vorbestimmte erste Schwellwert beim Empfänger erreicht wird. Dann wird am Sender die zweite Frequenz eingestellt, welche eine andere frequenzabhängige Dämpfung erfährt als die erste Frequenz. Daher muß die Sendeleistung nachgeregelt werden, bis die Lichtleistung am Empfänger den zweiten Schwellwert erreicht, welcher vorzugsweise dem Schwellwert bei der ersten Frequenz entspricht.

Beispielsweise erlaubt die am Sender notwendige Stromerhöhung, um bei der höheren Frequenz denselben Schwellwert zu erreichen wie bei der niedrigeren Frequenz, bei Kenntnis des Zusammenhangs zwischen Senderstrom und Lichtleistung eine Aussage über die frequenzabhängige Dämpfung, so dass die Bandbreite in analoger Weise wie in der auf der genauen Messung der empfangenen Lichtleistung basierenden Ausführungsform berechnet werden kann.

Die beschriebene Ausführungsform, basierend auf der Beeinflussung der Sendeleistung, ist auch insofern in der technischen Umsetzung einfacher, als meist ein ziemlich genauer linearer Zusammenhang zwischen Sendeleistung und Senderstrom bei LEDs und Lasern besteht und es technisch einfacher ist, Ströme im Bereich vom etwa 1 bis 100 mA genau einzustellen, als Lichtleistungen am Empfänger zu messen, da diese Messungen typischerweise auf der Auswertung von Diodenströmen im Bereich von pA oder kleiner beruhen.

Besonders bevorzugt erfolgt das Messen des ersten und zweiten Signalpegels, beispielsweise mit Hilfe der DMI-Schnittstelle eines Transceivers, für eingekoppelte Signale, welche ein kontinuierliches "10"-Bitmuster aufweisen, wie es beispielsweise mit dem IDLE-Signal eines Netzwerks wie z.E. 10Base-FL oder 100Base-FX zur Verfügung steht, wobei die Signalfrequenz der eingekoppelten Signale für die beiden Messungen unterschiedlich ist.

Das erfindungsgemäße Verfahren umfasst ferner vorteilhaft die Schritte des Ermittelns der Länge der optischen Faser mittels einer Laufzeitmessung und des Bestimmens des Bandbreiten-Längen-Produktes der optischen Faser aus der ermittelten Bandbreite und der ermittelten Länge der optischen Faser.

In Abhängigkeit des Bandbreiten-Längen-Produktes kann dann besonders vorteilhaft der Fasertyp der optischen Faser mittels hinterlegter Wertebereiche des Bandbreiten-Längen-Produktes für unterschiedliche Fasertypen ermittelt werden.

Die Erfindung sieht ferner ein Verfahren zum Aufbauen einer Verbindung zur Datenkommunikation zwischen einem ersten und einem zweiten Endgerät, welche mittels einer optischen Datenübertragungsstrecke mit zumindest einer optischen Faser miteinander verbunden sind, vor, welches vorteilhaft eine Initialisierungsphase vorsieht, innerhalb derer die Bandbreite der optischen Faser gemäß dem oben beschriebenen Verfahren zur Bandbreitenbestimmung einer optischen Faser ermittelt wird.

Vorteilhaft umfasst die optische Datenübertragungsstrecke einen ersten optischen Transceiver am ersten Streckenende und einen zweiten optischen Transceiver am zweiten Streckenende, welche über eine erste und eine zweite optische Faser für die beiden Übertragungsrichtungen miteinander verbunden sind. Für diese Anordnung sieht das Verfahren vorzugsweise das Ermitteln der Bandbreite der ersten und der zweiten optischen Faser vor. Das Ermitteln der Bandbreite der ersten und der zweiten optischen Faser kann nacheinander oder parallel erfolgen.

Das Ermitteln der Bandbreite dient insbesondere der Diagnose von vorliegenden Bandbreitenbegrenzungen, welche Einfluss auf die maximal mögliche Datenübertragungsrate haben. Dementsprechend sieht das Verfahren vorteilhaft den Schritt des automatischen Anpassens der Übertragungsrate der Datenkommunikation in Abhängigkeit der ermittelten Bandbreite der zumindest einen optischen Faser vor.

Ein elektronisches Bauteil zum Einsatz in einer optischen Datenübertragungsstrecke mit zumindest einer optischen Faser, welches insbesondere als integrierter Schaltkreis ausgebildet und zur Durchführung des oben beschriebenen Verfahrens zur Ermittlung der Bandbreite einer optischen Faser geeignet ist, umfasst erfindungsgemäß Mittel zur Berechnung eines Wertes für die Bandbreite einer optischen Faser in Abhängigkeit eines ersten und eines zweiten Signalpegels unter Verwendung eines Algorithmus, welcher auf einer vorbestimmten Vorschrift basiert, wobei die Vorschrift das frequenzabhängige Dämpfungsverhalten der optischen Faser beschreibt.

Der erste bzw. zweite Signalpegel ist vorzugsweise proportional zu einer ersten bzw. zweiten optischen Leistung eines Lichtes, welches jeweils bei einer ersten bzw. einer zweiten Frequenz in die optische Faser eingekoppelt oder nach Hindurchleiten durch die optische Faser empfangen wird.

Vorteilhaft kann das Bauteil in einen optischen LWL-Transceiver oder in einen der physikalischen Schicht eines Netzwerks zugeordneten PHY-Transceiver, insbesondere in einen Ethernet-PHY-Transceiver, integriert sein .

Mit besonderem Vorteil ist das Bauteil als separater Diagnosechip ausgebildet, welcher im Datenpfad zwischen einem der physikalischen Schicht eines Netzwerks zugeordneten PHY-Transceiver und einem optischen LWL-Transceiver geschaltet ist.

Zu diesem Zweck umfasst das Bauteil vorteilhaft sowohl eine Schnittstelle zum Anschluss an eine PECL-Schnittstelle (PECL: Positive Emitter Coupled Logic oder Pseudo Emitter Coupled Logic) des optischen Transceivers als auch eine Schnittstelle zum Anschluss an eine PECL-Schnittstelle des PHY-Transceivers.

Ferner umfasst das Bauteil vorzugsweise eine erste serielle Schnittstelle zum Anschluss an eine serielle Schnittstelle des optischen Transceivers und eine zweite serielle Schnittstelle zum Anschluss an eine serielle Schnittstelle des PHY-Transceivers.

Im Fall der normalen Ethernet-Kommunikation ist das als separater Diagnosechip ausgebildete Bauteil für die Ethernet-Datensignale transparent. In diesem Fall kann der Chip aber zum Beispiel für die Umsetzung der DMI-Schnittstelle von $I^2C$ (Inter-Integrated-Circuit) auf zum Beispiel SPI (Serial Peripheral Interface) genutzt werden, da letztere Schnittstelle bei Prozessoren für FastEthernet eher anzutreffen ist als eine $I^2C$-Schnittstelle. Dementsprechend umfasst das Bauteil vorteilhaft einen Umsetzer zur Umsetzung von Daten zwischen unterschiedlichen Obertragungsprotokollen, insbesondere zur Umsetzung von Daten von $I^2C$ in SPI und/oder von SPI in $I^2C$.

Bevorzugt umfasst das Bauteil ferner Mittel zum Bewirken einer Laufzeitmessung entlang der zumindest einen optischen Faser zum Ermitteln der Länge der optischen Faser sowie Mittel zum Bestimmen des Bandbreiten-Längen-Produktes der optischen Faser aus der ermittelten Bandbreite und der ermittelten Länge der optischen Faser.

Bei optischen Fasern ist die maximal nutzbare Bandbreite umgekehrt proportional zur Entfernung, die ohne Signalregeneration überbrückt werden kann. Das Produkt aus Bandbreite und Länge bildet daher eine Maßzahl, die hauptsächlich von der Art des verwendeten optischen Faser abhängig ist.

Das Bauteil umfasst daher ferner bevorzugt Mittel, welche dazu geeignet sind, den Fasertyp der optischen Faser in Abhängigkeit des Bandbreiten-Längen-Produktes zu ermitteln vorzugsweise erfolgt dies mittels für zumindest zwei unterschiedliche Fasertypen hinterlegte Wertebereiche des Bandbreiten-Längen-Produktes.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:

Fig. 1    schematisch eine optische Übertragungsstrecke mit zwei optischen Transceivern, welche über zwei optische Fasern miteinander verbunden sind,

Fig. 2    eine schematische Darstellung einer bevorzugten Ausführungsform eines erfindungsgemäßen elektronischen Bauteils,

Fig. 3    ein schematisches Diagramm des frequenzabhängigen Dämpfungsverhaltens einer POF-Faser.

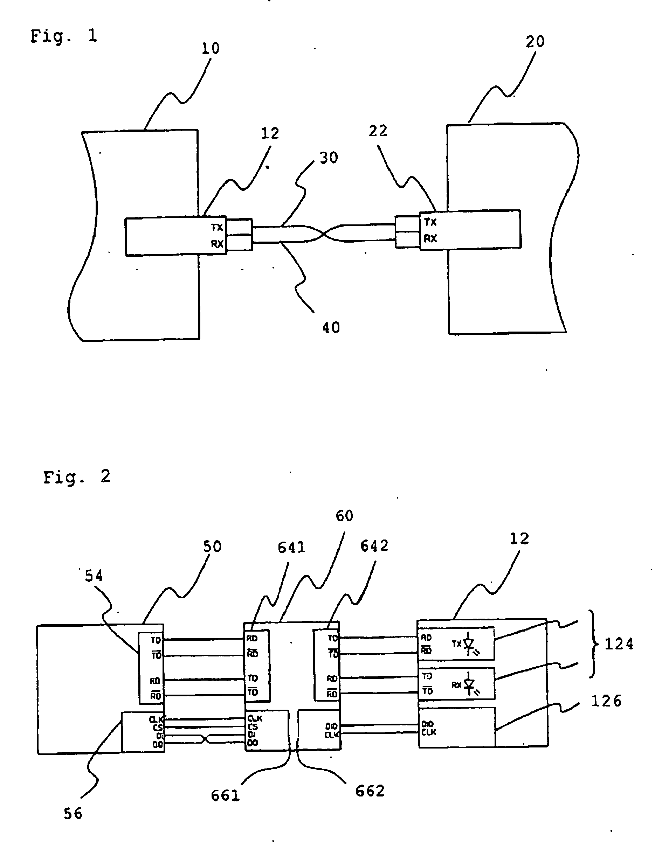

Fig. 1 zeigt eine optische Datenübertragungsstrecke zwischen einem ersten Endgerät 10 und einem zweiten Endgerät 20. Die Endgeräte 10 bzw, 20 sind mit einem ersten optischen Transceiver 12 bzw. einem zweiten optischen Transceiver 22 ausgestattet, welche über eine Duplex-LWL-Leitung mit einer ersten optischen Faser 30 und einer zweiten optischen Faser 40 für die beiden jeweiligen Datenrichtungen miteinander verbunden sind.

In diesem Ausführungsbeispiel werden als optische Fasern POF-Fasern eingesetzt und der erfindungsgemäße Bandbreitentest wird vor dem Verbindungsaufbau als Initialisierung der Schnittstellen durchgeführt. Im Folgenden wird der prinzipielle Ablauf der Bandbreitenbestimmung beschzieben. Zunächst sendet der Transceiver 12 ein Signal mit vorbestimmter Lichtleistung und mit einer ersten Frequenz, welche in diesem Ausführungsbeispiel typischerweise unterhalb 10 MHz liegt, und der Transceiver 22 mißt die OMA-Lichtleistung des empfangenen Signals. Anschließend sendet der Transceiver 12 ein Signal gleicher Lichtleistung aber mit einer zweiten Frequenz, welche in diesem Ausführungsbeispiel typischerweise zwischen 60 und 100 MHz liegt, und der Transceiver 22 mißt erneut die OMA-Lichtleistung des empfangenen Signals. Parallel wird die zweite Faser der Duplex-LWL-Leitung unter Vertauschung der Rollen von Transceiver 12 und 22 auf dieselbe Art vermessen. In Abhängigkeit der Kabellänge, der Lichteinkopplung (Einkoppel-NA) in die Faser und gegebenenfalls Biegungen oder Beschädigungen der Faser ist die empfangene Lichtleistung des zweiten Signals geringer als die des ersten Signals. Ist für ein FastEthernet-System diese Differenz größer als 3 dB, so ist von Übertragungsstörungen aufgrund von Bandbreitenbegrenzungen auszugehen. In diesem Fall kann eine entsprechende Warnmeldung generiert oder die Datenübertragungsrate automatisch angepasst werden.

Alternativ zur genauen Messung der empfangenen Lichtleistung kann auch, wie oben beschrieben, bei einer ersten und einer zweiten Frequenz die Sendeleistung solange variiert werden, bis auf der Empfangsseite ein vorgegebener Schwellwert für die empfangene Lichtleistung detektiert wird.

Außerdem kann die Streckenlänge der optischen Übertragungsstrecke zwischen den Endgeräten 10 und 20 über eine Laufzeitmessung, im Fall von Profinet beispielsweise über die Laufzeitmessung zur Uhrensynchronisation, ermittelt werden. Nachfolgend kann also die ermittelte Bandbreite noch mit der Kabellänge in Relation gesetzt und ausgewertet werden. Damit wird die automatische Bestimmung des Fasertyps möglich, da zum Beispiel eine POF-Faser ein anderes Bandbreiten-Längen-Produkt als eine HCS-Faser aufweist.

Das erfindungsgemäße Verfahren kann auch für Gbit-Transceiver und Multimode-Glasfasern (50/135 $\mu$m, 62,5/125$\mu$m) angewendet werden, da auch in dem Fall die mögliche Übertragungsdistanz zwischen zwei Transceivern bandbreitenbegrenzt ist. Dort sind die Frequenzen auf die Verhältnisse in den Glasfasern anzupassen.

Fig. 2 zeigt eine schematische Darstellung einer bevorzugten Ausführungsform eines erfindungsgemäßen elektronischen Bauteils 60, welches als separater Diagnose-Chip ausgebildet ist. Der Diagnose-Chip 60 ist im Datenpfad zwischen einem der physikalischen Schicht eines Netzwerks zugeordneten PHY-Transceiver 50 und einem optischen LNL-Transceiver 12 geschaltet. Zur Datenkommunikation sind in Bauteil 60 erste und zweite Schnittstellen 641 und 642 vorgesehen, über welche die PECL-Schnittstelle 124 des LWL-Transceivers 12 mit der PECL-Schnittstelle 54 des PHY-Transceivers 50 verbunden ist. Dadurch ist im Fall der normalen Ethernet-Kommunikation das als separater Diagnosechip ausgebildete Bauteil 60 für die Ethernet-Datensignale transparent.

Das Bauteil 60 umfasst ferner, insbesondere zur Abfrage der empfangenen Lichtleistung, eine erste serielle Schnittstelle 662 zum Anschluss an eine DMI-Schnittstelle 126 des optischen Transceivers 12. Außerdem ist eine zweite serielle Schnittstelle 661 zum Anschluss an eine serielle Schnittstelle 56 des PHY-Transceivers 50 vorgesehen.

In diesem Ausführungsbeispiel verwenden die Schnittstellen 126 und 662 das I$^2$C-Übertragungsprotokoll und die Schnitttellen 56 und 661 das SPI-Übertragungsprotokoll. Zur Umsetzung zwischen diesen beiden Übertragungsprotokollen ist in Bauteil 60 ein entsprechender, nicht dargestellter, Umsetzer integriert.

Die Erfindung läßt sich vorteilhaft in allen optischen Schnittstellen für FastEthernet-Geräte mit POF- und HCS-Faser-Schnittstellen, sowie für Glasfaserschnittstellen, welche insbesondere für Systeme mit Datenübertragungsraten von 10 Gbit/s interessant sind, einsetzen.

Besonders bei Profinet-Schnittstellen bietet das Verfahren zusätzliche Vorteile gegenüber herkömmlichen Diagnose-Systemen, da es nicht direkt auf dem verwendeten LWL-Transceiver beruht, sondern ein digitales Verfahren ist. Voraussetzung ist nur, daß der zum Einsatz kommende LWL-Transceiver eine DMI-Schnittstelle nach SFF-8472 besitzt und den AC-Anteil der Lichtleistung nach dem dort beschriebenen OMA-Verfahren (Optical Modulated Amplitude) mißt.

Wie bereits oben beschrieben, beruht das Verfahren prinzipiell darauf, beispielsweise mit Hilfe der DMI-Schnittstelle eines optischen Transceivers, zwei Dämpfungsmessungen bei zwei unterschiedlichen Frequenzen durchzuführen. Auf besonders einfache Weise lassen sich die Signale unterschiedlicher Frequenz durch ein kontinuierliches "10"-Bitmuster mit entsprechender Frequenz darstellen. Besonders vorteilhaft kann hierfür das IDLE-Signal eines Netzwerks eingesetzt werden.

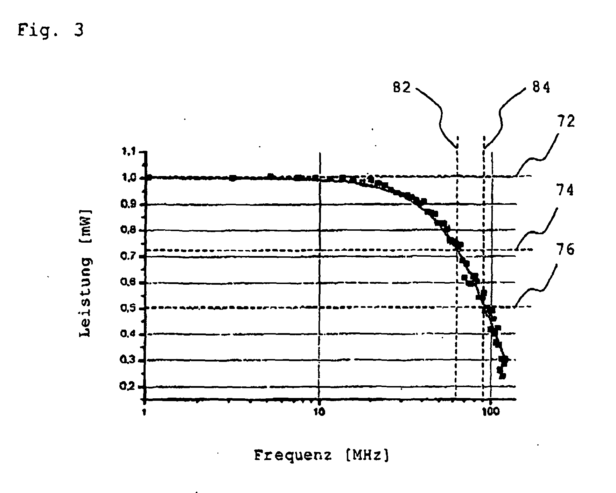

Im Folgenden wird mit Bezug auf Fig. 3 ein konkretes Beispiel der Bandbreitenermittlung beschrieben. Die Signale erster und zweiter Frequenz werden dabei mittels eines IDLE-Signals gemäß 10Base-FL für die erste Frequenz und mittels eines IDLE-Signals gemäß 100Base-FX für die zweite Frequenz gebildet. Das IDLE-Signal gemäß 10Base-FL weist eine Frequenz von 0,5 MHz auf, welche sich aus wechselnden "Licht an"- und "Licht aus"-Signalen von jeweils 1 $\mu$s Dauer ergibt. Das IDLE-Signal gemäß 100Base-FX weist eine Frequenz von 62,5 MHz auf, welche sich aus der Datenrate von 100 Mbit/s, der 4B/5B-Kodierung und einem Wechsel im NRZI-Code pro Bitzeit des IDLE-Signals ergibt.

Die erste Messung erfolgt dementsprechend bei einer Frequenz von 0,5 MHz, welche weit unterhalb der Bandbreite 84 der in diesem Ausführungsbeispiel verwendeten POF-Faser von etwa 90 MHz liegt. Dazu wird der Sender des ersten Transceivers mit dieser Frequenz angeregt und die am Empfänger des zweiten Transceivers ankommende gemittelte Lichtleistung über dessen DMI-Schnittstelle ermittelt. Bei dieser Frequenz findet keine frequenzabhängige Dämpfung statt und die empfangene Lichtleistung hat den in Fig. 3 mit Bezugszeichen 72 bezeichneten Pegel.

Anschließend wird eine zweite Messung mit der Frequenz 62,5 MHz durchgeführt, in Fig. 3 mit dem Bezugszeichen 82 versehen, welche in der Größenordnung der Bandbreite 84 von 90 MHz der zu vermessenden Faser liegt, bei welcher die empfangene Lichtleistung 76 gegenüber der Frequenz von Null auf die Hälfte abgesunken ist.

Aufgrund der Tiefpaß-Charakteristik der Faser ist diese zweite ermittelte Lichtleistung 74 kleiner als die erste 72. Aus der bekannten Tiefpaßcharakteristik der verwendeten LWL-Faser kann nun erfindungsgemäß auf die Bandbreite der Verbindung und über eine automatische Streckenlängenmessung auch auf den Fasertyp geschlossen werden.

Dazu wird als Vorschrift, welche das frequenzabhängige Dämpfungsverhalten der Faser beschreibt, eine Gaußsche Tiefpassfunktion entsprechend der Gleichung

$$(2) \quad P(f) = P_0 \cdot \exp\left(-\frac{f^2}{f_0^2}\right)$$

verwendet.

In diesem Ausführungsbeispiel wird die empfangene Lichtleistung über die DMI-Schnittstelle als elektrischer Signalpegel gemessen und es ergeben sich folgende Messwerte:

$$U(0{,}5 \text{ MHz}) = 452 \text{ mV} = U_0$$

$$U(62{,}5 \text{ MHz}) = 324 \text{ mV}$$

$$\Rightarrow \frac{U}{U_0} = 0{,}72$$

Da der über das OMA-Verfahren ermittelte und von der DMI-Schnittstelle gelieferte Signalpegel proportional zur empfangenen Lichtleistung ist, ergibt sich aus obiger Gleichung (2)

$$(3) \quad U(f) = U_0 \cdot \exp\left(-\frac{f^2}{f_0^2}\right); \text{ mit } U_0 = U(0{,}5 \text{ MHz})$$

$$(4) \quad \Rightarrow f_0 = \sqrt{-\frac{(62{,}5\text{MHz})^2}{\ln\left(\dfrac{U}{U_0}\right)}} = 109{,}05\text{MHz}$$

Hieraus lässt sich nun die Bandbreite der optischen Faser berechnen zu

$$f_{3dB} = \sqrt{-\ln(0{,}5)} \cdot f_0 = 90{,}8 \text{ MHz}$$

In analoger Weise lässt sich die Bandbreite der optischen Faser berechnen, wenn die Sendeleistung variiert wird, bis die empfangene optische Leistung einen vorgegebenen Schwellwert erreicht, wobei der Schwellwert für beide Frequenzen gleich ist.

Für diese Variante ergibt sich

$$(5) \quad f_0 = \sqrt{-\frac{(f_2)^2}{\ln\left(\frac{P_{0;f_1}}{P_{0;f_2}}\right)}} = \sqrt{-\frac{(62,5\text{MHz})^2}{\ln\left(\frac{P_{0;0,5\text{MHz}}}{P_{0;62,5\text{MHz}}}\right)}}$$

mit

$P_{0;f1}$ :  Optische Sendeleistung zum Erreichen des Schwellwertes bei der ersten Frequenz, und

$P_{0;f2}$ :  Optische Sendeleistung zum Erreichen des Schwellwertes bei der zweiten Frequenz.

Bei einem linearen Zusammenhang zwischen Senderstrom I der zum Senden verwendeten LED oder des zum Senden verwendeten Lasers und eingekoppelter Lichtleistung ergibt sich

$$(6) \quad f_0 = \sqrt{-\frac{(f_2)^2}{\ln\left(\frac{I_{0;f_1}}{I_{0;f_2}}\right)}}$$

mit

$I_{0;f1}$ :  Senderstrom zum Erreichen des Schwellwertes bei der ersten Frequenz, und

$I_{0;f2}$ :  Senderstrom zum Erreichen des Schwellwertes bei der zweiten Frequenz.

**Patentansprüche**

1.  Verfahren zur Bestimmung der Bandbreite zumindest einer optischen Faser, umfassend die Schritte

- Einkoppeln von Licht mit einer ersten optischen Leistung und einer ersten Frequenz in die optische Faser,
- Messen eines ersten Signalpegels in Abhängigkeit der optischen Leistung des durch die optische Faser hindurchgeleiteten Lichtes der ersten Frequenz,
- Einkoppeln von Licht mit einer zweiten optischen Leistung und einer zweiten Frequenz in die optische Faser,
- Messen eines zweiten Signalpegels in Abhängigkeit der optischen Leistung des durch die optische Faser hindurchgeleiteten Lichtes der zweiten Frequenz,
- Ermitteln der Bandbreite der optischen Faser in Abhängigkeit der ersten und zweiten optischen Leistung und/ oder des gemessenen ersten und zweiten Signalpegels unter Verwendung einer vorbestimmten Vorschrift, welche das frequenzabhängige Dämpfungsverhalten der optischen Faser beschreibt.

2.  Verfahren nach Anspruch 1, wobei
die erste optische Leistung des eingekoppelten Lichtes der ersten Frequenz und die zweite optische Leistung des eingekoppelten Lichtes der zweiten Frequenz vorbestimmte Werte aufweisen.

3.  Verfahren nach einem der vorhergehenden Ansprüche, wobei die erste optische Leistung des eingekoppelten Lichtes der ersten Frequenz und die zweite optische Leistung des eingekoppelten Lichtes der zweiten Frequenz im wesentlichen gleich sind.

4.  Verfahren nach Anspruch 1, wobei

- die erste optische Leistung des eingekoppelten Lichtes der ersten Frequenz variiert wird, bis der gemessene erste Signalpegel einen vorbestimmten ersten Schwellwert erreicht, und
- die zweite optische Leistung des eingekoppelten Lichtes der zweiten Frequenz variiert wird, bis der gemessene zweite Signalpegel einen vorbestimmten zweiten Schwellwert erreicht.

5. Verfahren nach Anspruch 4, wobei der erste und zweite Schwellwert im wesentlichen gleich sind.

6. Verfahren nach einem der vorhergehenden Ansprüche, ferner umfassend

- Ermitteln einer ersten Dämpfung der optischen Faser für durchgehendes Licht der ersten Frequenz und
- Ermitteln einer zweiten Dämpfung der optischen Faser für durchgehendes Licht der zweiten Frequenz.

7. Verfahren nach einem der vorstehenden Ansprüche, wobei die vorbestimmte Vorschrift, welche das frequenzabhängige Dämpfungsverhalten der optischen Faser beschreibt, eine Gaußsche Tiefpaß-Funktion ist.

8. Verfahren nach einem der vorstehenden Ansprüche, wobei die zumindest eine optische Faser ein Polymer und/oder ein Glas umfasst, insbesondere ausgebildet als POF- oder HCS-Faser.

9. Verfahren nach einem der vorstehenden Ansprüche, wobei die erste Frequenz kleiner, insbesondere zumindest um den Faktor 10, insbesondere zumindest um den Faktor 100, kleiner als die Bandbreite der optischen Faser ist.

10. Verfahren nach einem der vorstehenden Ansprüche, wobei die frequenzabhängige Dämpfung der optischen Faser bei der ersten Frequenz im wesentlichen Null ist.

11. Verfahren nach einem der vorstehenden Ansprüche, wobei die zweite Frequenz etwa bei der Bandbreite der optischen Faser liegt.

12. Verfahren nach einem der vorstehenden Ansprüche, wobei die zweite Frequenz oberhalb der Bandbreite der optischen Faser liegt.

13. Verfahren nach einem der vorstehenden Ansprüche, wobei die optische Faser eine frequenzabhängige Dämpfung für durchgehendes Licht der zweiten Frequenz aufweist, welche zwischen 1 und 5 dB, insbesondere zwischen 2 und 4 dB insbesondere etwa 3 dB oberhalb der frequenzabhängigen Dämpfung für durchgehendes Licht der ersten Frequenz liegt.

14. Verfahren nach einem der vorstehenden Ansprüche, wobei das Messen des ersten und zweiten Signalpegels nach dem OMA-Verfahren (Optical Modulated Amplitude) mittels eines optischen Transceivers erfolgt, welcher eine DMI-Schnittstelle (Diagnostic Monitoring Interface) gemäß SFF-8472 aufweist.

15. Verfahren nach einem der vorstehenden Ansprüche, wobei das durch die optische Faser geleitete Licht der ersten und/oder zweiten Frequenz ein Datensignal umfasst, welches abwechselnd die Bitwerte 1 und 0 aufweist.

16. Verfahren nach Anspruch 15, wobei das Datensignal ein IDLE-Signal gemäß Netzwerkstandard, insbesondere gemäß 10Base-FL oder 100Base-FX, ist.

17. Verfahren nach einem der vorstehenden Ansprüche, ferner umfassend die Schritte

- Ermitteln der Länge der optischen Faser mittels einer Laufzeitmessung,
- Bestimmen des Bandbreiten-Längen-Produktes der optischen Faser aus der ermittelten Bandbreite und der ermittelten Länge der optischen Faser.

18. Verfahren nach Anspruch 17, ferner umfassend

- Ermitteln des Fasertyps der optischen Faser in Abhängigkeit des Bandbreiten-Längen-Produktes mittels hinterlegter Wertebereiche des Bandbreiten-Längen-Produktes für zumindest zwei unterschiedliche Fasertypen.

19. Verfahren zum Aufbauen einer Verbindung zur Datenkommunikation zwischen einem ersten und einem zweiten Endgerät, welche mittels einer optischen Datenübertragungsstrecke mit zumindest einer optischen Faser miteinander verbunden sind, umfassend das Initialisieren der Verbindung, wobei das Initialisieren das Ermitteln der Bandbreite der zumindest einen optischen Faser gemäß einem der Ansprüche 1 bis 18 umfasst.

**20.** Verfahren nach Anspruch 19, wobei die optische Datenübertragungsstrecke einen ersten optischen Transceiver am ersten Streckenende und einen zweiten optischen Transceiver am zweiten Streckenende umfasst, welche über eine erste und eine zweite optische Faser für die beiden Übertragungsrichtungen miteinander verbunden sind, und wobei die Bandbreite der ersten und der zweiten optischen Faser ermittelt wird.

**21.** Verfahren nach Anspruch 20, wobei das Ermitteln der Bandbreite der ersten und der zweiten optischen Faser nacheinander erfolgt.

**22.** Verfahren nach Anspruch 20, wobei das Ermitteln der Bandbreite der ersten und der zweiten optischen Faser im wesentlichen gleichzeitig erfolgt.

**23.** Verfahren nach einem der Ansprüche 19 bis 22, wobei das Initialisieren der Verbindung den Schritt des automatischen Anpassens der Übertragungsrate der Datenkommunikation in Abhängigkeit der ermittelten Bandbreite der zumindest einen optischen Faser umfasst.

**24.** Elektronisches Bauteil zum Einsatz in einer optischen Datenübertragungsstrecke, welche zumindest eine optische Faser aufweist, insbesondere ausgebildet als integrierter Schaltkreis, umfassend Mittel zur Berechnung eines Wertes für die Bandbreite einer optischen Faser in Abhängigkeit eines ersten und eines zweiten Signalpegels unter Verwendung eines Algorithmus, welcher auf einer vorbestimmten Vorschrift basiert, wobei die Vorschrift das frequenzabhängige Dämpfungsverhalten der optischen Faser beschreibt.

**25.** Bauteil nach Anspruch 24, welches in einen optischen LWL-Transceiver integriert ist.

**26.** Bauteil nach Anspruch 24, welches in einen der physikalischen Schicht eines Netzwerks zugeordneten PHY-Transceiver, insbesondere in einen Ethernet-PHY-Transceiver, integriert ist.

**27.** Bauteil nach Anspruch 24, welches einem optischen LWL-Transceiver und einem der physikalischen Schicht eines Netzwerks zugeordneten PHY-Transceiver zwischengeschaltet ist.

**28.** Bauteil nach Anspruch 27, umfassend eine Schnittstelle zum Anschluss an eine PECL-Schnittstelle des optischen Transceivers und eine Schnittstelle zum Anschluss an eine PECL-Schnittstelle des PHY-Transceivers.

**29.** Bauteil nach Anspruch 27 oder 28, umfassend eine erste serielle Schnittstelle zum Anschluss an eine serielle Schnittstelle des optischen Transceivers und eine zweite serielle Schnittstelle zum Anschluss an eine serielle Schnittstelle des PHY-Transceivers.

**30.** Bauteil nach Anspruch 29, umfassend einen Umsetzer zur Umsetzung von Daten zwischen unterschiedlichen Übertragungsprotokollen, insbesondere zur Umsetzung von Daten von $I^2C$ in SPI und/oder von SPI in $I^2C$.

**31.** Bauteil nach einem der vorstehenden Ansprüche 24 bis 30, ferner umfassend Mittel zum Bewirken einer Laufzeitmessung entlang der zumindest einen optischen Faser zum Ermitteln der Länge der optischen Faser und Mittel zum Bestimmen des Bandbreiten-Längen-Produktes der optischen Faser aus der ermittelten Bandbreite und der ermittelten Länge der optischen Faser.

**32.** Bauteil nach einem der vorstehenden Ansprüche 24 bis 31, ferner umfassend Mittel zum Ermitteln des Fasertyps der optischen Faser in Abhängigkeit des Bandbreiten-Längen-Produktes mittels hinterlegter Wertebereiche des Bandbreiten-Längen-Produktes für zumindest zwei unterschiedliche Fasertypen.

**33.** Bauteil nach einem der vorstehenden Ansprüche 24 bis 32, ausgebildet zur Durchführung eines Verfahrens gemäß einem der vorstehenden Ansprüche 1 bis 23.

**Claims**

**1.** Method for determining the bandwidth of at least one optical fibre, comprising the steps:

- incoupling of light with a first optical power and at a first frequency into the optical fibre,
- measurement of a first signal level in dependence upon the optical power of the light passed through the optical fibre at the first frequency,

- incoupling of light with a second optical power and at a second frequency into the optical fibre,
- measurement of a second signal level in dependence upon the optical power of the light passed through the optical fibre at the second frequency,
- determination of the bandwidth of the optical fibre in dependence upon the first and second optical power and / or the measured first and second signal level, using a predetermined rule which describes the frequency-dependent damping behaviour of the optical fibre.

2. Method according to claim 1, wherein the first optical power of the incoupled light at the first frequency and the second optical power of the incoupled light at the second frequency have predetermined values.

3. Method according to one of the preceding claims, wherein the first optical power of the incoupled light at the first frequency and the second optical power of the incoupled light at the second frequency are essentially equal.

4. Method according to claim 1, wherein

- the first optical power of the incoupled light at the first frequency is varied until the measured first signal level reaches a predetermined first threshold value, and
- the second optical power of the incoupled light at the second frequency is varied until the measured second signal level reaches a predetermined second threshold value.

5. Method according to claim 4, wherein the first and second threshold value are essentially equal.

6. Method according to one of the preceding claims, further comprising:

- determination of a first damping of the optical fibre for light passing through at the first frequency and
- determination of a second damping of the optical fibre for light passing through at the second frequency.

7. Method according to one of the preceding claims, wherein the predetermined rule which describes the frequency-dependent damping behaviour of the optical fibre is a Gaussian low pass function.

8. Method according to one of the preceding claims, wherein the at least one optical fibre comprises a polymer and / or a glass, in particular being formed as a POF or HCS fibre.

9. Method according to one of the preceding claims, wherein the first frequency is smaller, in particular by at least factor 10, more particularly by at least factor 100, than the bandwidth of the optical fibre.

10. Method according to one of the preceding claims, wherein the frequency-dependent damping of the optical fibre at the first frequency is essentially zero.

11. Method according to one of the preceding claims, wherein the second frequency is approximately in the bandwidth of the optical fibre.

12. Method according to one of the preceding claims, wherein the second frequency is above the bandwidth of the optical fibre.

13. Method according to one of the preceding claims, wherein the optical fibre has a frequency-dependent damping for light passing through at the second frequency which lies between 1 and 5 dB, in particular between 2 and 4 dB, in particular around 3 dB above the frequency-dependent damping for light passing through at the first frequency.

14. Method according to one of the preceding claims, wherein the first and the second signal level are measured according to the OMA (Optical Modulated Amplitude) method by means of an optical transceiver which has a DMI (Diagnostic Monitoring Interface) according to SFF-8472.

15. Method according to one of the preceding claims, wherein the light passed through the optical fibre at the first and / or second frequency comprises a data signal which has the bit values 1 and 0 alternately.

16. Method according to claim 15, wherein the data signal is an IDLE signal according to the network standard, in particular according to 10Base-FL or 100Base-FX.

17. Method according to one of the preceding claims, further comprising the steps:

    - determination of the length of the optical fibre by means of a run time measurement,
    - determination of the bandwidth-length-product of the optical fibre from the determined bandwidth and the determined length of the optical fibre.

18. Method according to claim 17, further comprising:

    - determination of the fibre type of the optical fibre in dependence upon the bandwidth-length-product by means of stored value ranges of the bandwidth-length-product for at least two different fibre types.

19. Method for setting up a link for data communication between a first and a second terminal which are connected to each other by means of an optical data transmission path with at least one optical fibre, comprising the initialisation of the link, wherein the initialisation comprises the determination of the bandwidth of the at least one optical fibre according to one of the claims 1 to 18.

20. Method according to claim 19, wherein the optical data transmission path comprises a first optical transceiver at the first path end and a second optical transceiver at the second path end which are connected to each other by means of a first and a second optical fibre for the two transmission directions, and wherein the bandwidths of the first and the second optical fibre are determined.

21. Method according to claim 20, wherein the bandwidths of the first and the second optical fibre are determined successively.

22. Method according to claim 20, wherein the bandwidths of the first and the second optical fibre are determined essentially simultaneously.

23. Method according to one of the claims 19 to 22, wherein the initialisation of the link comprises the step of automatic adaptation of the transmission rate of the data communication in dependence upon the determined bandwidth of the at least one optical fibre.

24. Electronic component for use in an optical data transmission path which comprises at least one optical fibre, in particular formed as an integrated circuit, comprising means for calculating a value for the bandwidth of an optical fibre in dependence upon a first and a second signal level using an algorithm which is based upon a predetermined rule, whereby the rule describes the frequency-dependent damping behaviour of the optical fibre.

25. Component according to claim 24, which is integrated into an optical waveguide transceiver.

26. Component according to claim 24, which is integrated into a PHY transceiver associated with the physical layer of a network, in particular into an Ethernet PHY transceiver.

27. Component according to claim 24, which is connected between an optical waveguide transceiver and a PHY transceiver associated with the physical layer of a network.

28. Component according to claim 27, comprising an interface for connection to a PECL interface of the optical transceiver and an interface for connection to a PECL interface of the PHY transceiver.

29. Component according to claim 27 or 28, comprising a first serial interface for connection to a serial interface of the optical transceiver and a second serial interface for connection to a serial interface of the PHY transceiver.

30. Component according to claim 29, comprising a converter for converting data between different transmission protocols, in particular for converting data from I2C into SPI and / or from SPI into I2C.

31. Component according to one of the preceding claims 24 to 30, further comprising means for bringing about a run time measurement along the at least one optical fibre in order to determine the length of the optical fibre and means for determining the bandwidth-length-product of the optical fibre from the determined bandwidth and the determined length of the optical fibre.

32. Component according to one of the preceding claims 24 to 31, further comprising means for determining the fibre type of the optical fibre in dependence upon the bandwidth-length-product by means of stored value ranges of the bandwidth-length-product for at least two different fibre types.

33. Component according to one of the preceding claims 24 to 32, designed to implement a method according to one of the preceding claims 1 to 23.

**Revendications**

1. Procédé pour déterminer la largeur de bande d'au moins une fibre optique, comprenant les étapes suivantes

   - injection de lumière avec une première puissance optique et une première fréquence dans la fibre optique,
   - mesure d'un premier niveau de signal en fonction de la puissance optique de la lumière guidée à travers la fibre optique de la première fréquence,
   - injection de lumière avec une seconde puissance optique et une seconde fréquence dans la fibre optique,
   - mesure d'un second niveau de signal en fonction de la puissance optique de la lumière guidée à travers la fibre optique de la seconde fréquence,
   - détermination de la largeur de bande de la fibre optique en fonction de la première et de la seconde puissance optique et/ou du premier et du second niveau de signal mesuré avec l'utilisation d'une prescription prédéfinie, qui décrit le comportement à l'amortissement dépendant de la fréquence de la fibre optique.

2. Procédé selon la revendication 1, la première puissance optique de la lumière injectée de la première fréquence et la seconde puissance optique de la lumière injectée de la seconde fréquence présentant des valeurs prédéfinies.

3. Procédé selon l'une quelconque des revendications précédentes, la première puissance optique de la lumière injectée de la première fréquence et la seconde puissance optique de la lumière injectée de la seconde fréquence étant sensiblement identiques.

4. Procédé selon la revendication 1,

   - la première puissance optique de la lumière injectée de la première fréquence étant modifiée jusqu'à ce que le premier niveau de signal mesuré atteigne une première valeur seuil prédéfinie, et
   - la seconde puissance optique de la lumière injectée de la seconde fréquence étant modifiée jusqu'à ce que le second niveau de signal mesuré atteigne une seconde valeur seuil prédéfinie.

5. Procédé selon la revendication 4, la première et la seconde valeur seuil étant sensiblement identiques.

6. Procédé selon l'une quelconque des revendications précédentes, comprenant également

   - détermination d'un premier amortissement de la fibre optique pour la lumière continue de la première fréquence et
   - détermination d'un second amortissement de la fibre optique pour la lumière continue de la seconde fréquence.

7. Procédé selon l'une quelconque des revendications précédentes, la prescription prédéfinie, qui décrit le comportement à l'amortissement dépendant de la fréquence de la fibre optique, étant une fonction passe-bas gaussienne.

8. Procédé selon l'une quelconque des revendications précédentes, la au moins une fibre optique comprenant un polymère et/ou un verre, en particulier conçue sous forme de fibre POF ou HCS.

9. Procédé selon l'une quelconque des revendications précédentes, la première fréquence étant inférieure, en particulier au moins de 10 fois, en particulier au moins du facteur 100, à la largeur de bande de la fibre optique.

10. Procédé selon l'une quelconque des revendications précédentes, l'amortissement, dépendant de la fréquence, de la fibre optique étant sensiblement nul à la première fréquence.

**11.** Procédé selon l'une quelconque des revendications précédentes, la seconde fréquence se situant à peu près au niveau de la largeur de bande de la fibre optique.

**12.** Procédé selon l'une quelconque des revendications précédentes, la seconde fréquence étant située au-dessus de la largeur de bande de la fibre optique.

**13.** Procédé selon l'une quelconque des revendications précédentes, la fibre optique présentant un amortissement dépendant de la fréquence pour la lumière continue de la seconde fréquence, qui se situe entre 1 et 5 dB, en particulier entre 2 et 4 dB, en particulier environ 3 dB au-dessus de l'amortissement dépendant de la fréquence pour la lumière continue de la première fréquence.

**14.** Procédé selon l'une quelconque des revendications précédentes, la mesure du premier et du second niveau de signal s'effectuant selon le procédé OMA (Optical Modulated Amplitude) au moyen d'un émetteur-récepteur optique, qui présente une interface DMI (Diagnostic Monitoring Interface) selon SFF-8472.

**15.** Procédé selon l'une quelconque des revendications précédentes, la lumière, dirigée par la fibre optique, de la première et/ou de la seconde fréquence comprenant un signal de données qui présente alternativement les valeurs binaires 1 et 0.

**16.** Procédé selon la revendication 15, le signal de données étant un signal IDLE selon le standard de réseau, en particulier selon 10Base-FL ou 100Base-FX.

**17.** Procédé selon l'une quelconque des revendications précédentes, comprenant également les étapes suivantes

- détermination de la longueur de la fibre optique au moyen d'une mesure de temps de parcours,
- détermination du produit de la largeur et de la longueur de bande de la fibre optique à partir de la largeur de bande déterminée et de la longueur déterminée de la fibre optique.

**18.** Procédé selon la revendication 17, comprenant également

- détermination du type de fibre de la fibre optique en fonction du produit de la largeur et de la longueur de bande au moyen de plages de valeur consignées du produit de la largeur et de la longueur de bande pour au moins deux types de fibres différents.

**19.** Procédé pour établir une liaison pour la communication de données entre un premier et un second terminal, qui sont reliés entre eux au moyen d'un tronçon optique de transmission de données avec au moins une fibre optique, comprenant l'initialisation de la liaison, l'initialisation comprenant la détermination de la largeur de bande de la au moins une fibre optique selon l'une quelconque des revendications 1 à 18.

**20.** Procédé selon la revendication 19, le tronçon optique de transmission de données comprenant un premier émetteur-récepteur optique sur la première extrémité de tronçon et un second émetteur-récepteur optique sur la seconde extrémité de tronçon, qui sont reliés entre eux au moyen d'une première et d'une seconde fibre optique pour les deux sens de transmission, et la largeur de bande de la première et de la seconde fibre optique étant déterminée.

**21.** Procédé selon la revendication 20, la détermination de la largeur de bande de la première et de la seconde fibre optique s'effectuant de façon successive.

**22.** Procédé selon la revendication 20, la détermination de la largeur de bande de la première et de la seconde fibre optique s'effectuant sensiblement simultanément.

**23.** Procédé selon l'une quelconque des revendications 19 à 22, l'initialisation de la liaison comprenant l'étape de l'adaptation automatique du débit de transmission de la communication de données en fonction de la largeur de bande déterminée de la au moins une fibre optique.

**24.** Composant électronique pour une utilisation dans un tronçon optique de transmission de données, qui comprend au moins une fibre optique, réalisée en particulier sous forme de circuit intégré, comprenant des moyens pour le calcul d'une valeur pour la largeur de bande d'une fibre optique en fonction d'un premier et d'un second niveau de signal avec l'utilisation d'un algorithme, qui est basé sur une spécification prédéfinie, la spécification décrivant le comportement à l'amortissement, dépendant de la fréquence, de la fibre optique.

**25.** Composant selon la revendication 24, qui est intégré dans un émetteur-récepteur à guide d'ondes optiques.

**26.** Composant selon la revendication 24, qui est intégré dans un émetteur-récepteur PHY attribué à la couche physique d'un réseau, en particulier dans un émetteur-récepteur PHY Ethernet.

**27.** Composant selon la revendication 24, qui est intercalé entre un émetteur-récepteur à guide d'ondes optiques et un émetteur-récepteur PHY attribué à la couche physique d'un réseau.

**28.** Composant selon la revendication 27, comprenant une interface pour le raccordement à une interface PECL de l'émetteur-récepteur optique et une interface pour le raccordement a une interface PECL de l'émetteur-récepteur PHY.

**29.** Composant selon la revendication 27 ou 28, comprenant une première interface série pour le raccordement à une interface série de l'émetteur-récepteur optique et une seconde interface série pour le raccordement à une interface série de l'émetteur-récepteur PHY.

**30.** Composant selon la revendication 29, comprenant un convertisseur pour la conversion de données entre différents protocoles de transmission, en particulier pour la conversion de données de $I^2C$ en SPI et/ou de SPI en $I^2C$.

**31.** Composant selon l'une quelconque des revendications 24 à 30 précédentes, comprenant également des moyens pour effectuer une mesure de temps de propagation le long de la au moins une fibre optique pour déterminer la longueur de la fibre optique et des moyens pour déterminer le produit de la largeur et de la longueur de bande de la fibre optique à partir de la largeur de bande déterminée et de la longueur déterminée de la fibre optique.

**32.** Composant selon l'une quelconque des revendications 24 à 31 précédentes, comprenant également des moyens pour déterminer le type de fibre optique en fonction du produit de la largeur et de la longueur de bande au moyen de plages de valeurs consignées du produit de la largeur et de la longueur de bande pour au moins deux types de fibres différents.

**33.** Composant selon l'une quelconque des revendications 24 à 32 précédentes, réalisé pour mettre en oeuvre un procédé selon l'une quelconque des revendications 1 à 23 précédentes.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4217899 C2
- EP 1227604 A2
- EP 1018642 A